# EUROPEAN PATENT SPECIFICATION

(11) **EP 3 342 805 B1**
(45) Date of publication and mention of the grant of the patent: **24.03.2021**
(21) Application number: 16382677.9
(22) Date of filing: 30.12.2016
(51) Int. Cl.: C08J 5/24, C08J 5/04, C08L 63/10

(54) **PREPREG, PROCESS FOR MANUFACTURING THE PREPREG, PART INCLUDING THE PREPREG AND PROCESS FOR MANUFACURING THE PART**
PREPREG, VERFAHREN ZUR HERSTELLUNG DES PREPREGS, TEIL MIT DEM PREPREG UND VERFAHREN ZUR HERSTELLUNG DES TEILS
PRÉIMPRÉGNÉ, PROCÉDÉ DE FABRICATION DU PRÉ-IMPRÉGNÉ, PARTIE COMPRENANT LE PRÉIMPRÉGNÉ ET PROCÉDÉ DE FABRICATION DE LADITE PARTIE

(43) Date of publication of application: 04.07.2018
(73) Proprietor: Fundación Gaiker, 48170 Zamudio Vizcaya (ES)
(72) Inventor: GONDRA ZUBIETA, Joseba Koldo, 48170 Zamudio - VIZCAYA (ES); NEIRA HERNANDEZ, Santiago, 48170 Zamudio - VIZCAYA (ES); GÓMEZ ALONSO, José Luis, 48170 Zamudio - VIZCAYA (ES); ALLUE SALVADOR, Alexandra, 48170 Zamudio - VIZCAYA (ES)
(74) Representative: Balder IP Law, S.L.

(56) References cited:
- EP-A2- 0 235 772
- US-A- 3 947 422
- US-A- 6 040 391

## Description

### FIELD OF THE INVENTION

The present invention relates to prepregs, which is the common abbreviation for pre-impregnated materials, also known as fiber reinforced composite materials. The invention also relates to the process for manufacturing the prepregs, to parts including the prepregs and to the process for manufacturing the parts including the prepregs. The instant prepreg (hereinafter the prepreg of the invention) includes an improved resin composition which provides advantages for the prepeg of the invention as compared to conventional prepregs. The prepreg of the invention can be used for the manufacturing of a diversity parts with many different applications.

### BACKGROUND OF THE INVENTION

Fiber-reinforced composite materials and parts made of said prepregs are lightweight, while offering good strength and high rigidity, and are consequently widely used in a variety of applications from sports and leisure applications, aerospace application and general industrial applications. Parts including these prepregs are typically produced in a press by molding at high pressure and temperature.

"Prepreg" is the common term for a reinforcing fabric which has been pre-impregnated with an impregnating paste. The impregnating paste includes resins formulated to impregnate the reinforcing fibers of the reinforcing fabric. Usual fiber weights are within 800-1200g/m² for glass fiber and 200-800g/m² for carbon fiber.

US-A-6040391 discloses a prepreg for SMC comprising reinforcing fibers, a bisphenol A- or novolac-based epoxy vinyl ester resin, an acid functionalized novolac vinyl ester resin, a thickening agent and a catalyst. The present invention provides new prepregs, which retain the level of workability associated with conventional prepregs and show good mechanical properties, while providing improved and advantageous characteristics over them.

### DETAILED DESCRIPTION OF THE FIGURES

Figure 1 shows a toecap manufactured with the prepreg of the invention.
Figure 2A is a top view and figure 2B is a side view of a pit cover manufactured with the prepreg of the invention.

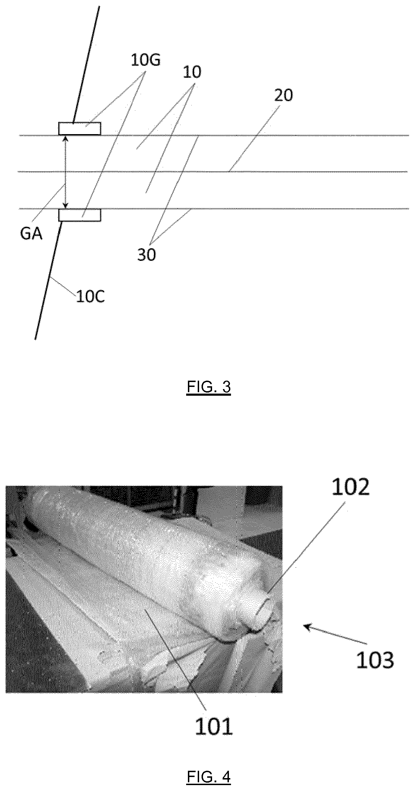

Figure 3 is diagram showing a detail of the process for manufacturing the prepreg of the invention. Figure 3 shows a portion of a container for storing the resin composition. The container is provided with a discharging port comprising gates to selectively open/close the discharging port and to regulate a gate aperture when the gates are open. Figure 3 also shows the elements that conform the prepreg: the fiber layer, the resin composition and supporting films. The arrangement shown in figure 3 comprises a fiber layer, a resin composition impregnating the fiber layer above and below, and supporting films above and below the resin composition to prepare a prepreg.
Figure 4 is a diagram of a reel showing a prepreg wound onto a spool.

The invention includes the following elements:
Part 1
Resin composition 10
Container 10C
Gates 10G
Fiber layer 20
Supporting film 30
Prepreg 101
Spool 102
Reel 103

### DESCRIPTION OF THE INVENTION

The inventors have surprisingly found an improved resin composition to be used as an impregnating paste for the preparation of the prepregs of the present invention with improved properties.

In a first aspect, the invention relates to a prepreg which comprises:
a) a resin composition according to claim 1 comprising:
   a1) at least one thickenable bisphenol A-based epoxy vinyl ester resin;
   a2) at least one high-performance epoxy vinyl ester resin; and
   a3) a thickening agent;
   a4) a catalyst system;
b) a fiber layer.

These ingredients are described below.

### (i) Thickenable bisphenol A-based epoxy vinyl ester resin.

In the context of the present invention, a thickenable bisphenol A-based (hereinafter bis-A-based) epoxy vinyl ester resin is to be understood as a resin having an acid value between 10-50mg KOH/g, preferably between 20-50mg KOH/g and more preferably 40-50mg KOH/g; in a particular embodiment, the value is 45mg KOH/g.

Also in the context of the invention, the thickenable bis-A-based epoxy vinyl ester resin, after curing, the term curing including polymerization, has the following mechanical properties:
a) a tensile strength between 55MPa and 80MPa (ISO 527-1 2012), preferably between 60MPa and 80MPa and more preferably between 75MPa and 80MPa;
b) an elongation at break between 2% and 6% (ISO 527-1 2012), preferably between 3% and 6%, more preferably between 4% and 6%; and
c) a flexural strength between 100MPa and 140MPa (ISO 178 2010), preferably between 110MPa and 140MPa and even preferably between 130MPa and 140MPa.

Thus, the thickenable bis-A-based epoxy vinyl ester resin is structured for use in Sheet Molding Compound (SMC) or bulk molding compound manufacturing processes. Additionally, the resin shall be compatible with low shrink additives.

This resin contains carboxylic groups capable of reacting with magnesium oxide to form magnesium carboxylates.

### (ii) High-performance epoxy vinyl ester resin.

A high-performance epoxy vinyl ester is a resin with greatly improved mechanical properties, which presents increased flexibility and tensile properties along with exceptional impact resistance. In the context of the present invention, the high-performance epoxy vinyl ester resin, after curing, the term curing including polymerization, has the following mechanical properties:
a) an impact resistance, Izod Impact (unnotched), between 400 and 550J/m (ASTM D 256-2010), preferably 450 and 550J/m, more preferably between 490 and 550J/m; these values are a 40% increase in impact resistance compared to traditional flexible vinyl ester resins;
b) a tensile strength between 55MPa and 80MPa (ISO 527-1 2012), preferably 60MPa and 80MPa, more preferably between 65MPa and 80MPa;
c) a tensile elongation at break between 8% and 14% (ISO 527-1 2012), preferably between 10% and 14% and more preferably between 12% and 14%; and
d) a flexural strength greater than or equal to 100MPa and flexural modulus greater than or equal to 2500MPa (ISO 178 2010); preferably flexural strength between 100MPa and 130MPa and flexural modulus between 2500MPa and 3.500MPa; more preferably flexural strength between 110MPa and 130MPa and flexural modulus between 2650MPa and 3500MPa; and even more preferably flexural strength between 120MPa and 130MPa and flexural modulus between 2800MPa and 3500MPa.

Tests to characterize the bis-A-based epoxy vinyl ester resin and the high-performance epoxy vinyl ester resin by the mechanical properties after curing were performed. To perform these tests, the bis-A-based epoxy vinyl ester resin and the high-performance epoxy vinyl ester resin were polymerized using the catalyst system that will be described below. Sample amounts of polymerized bis-A-based epoxy vinyl ester resin (in other words, bis-A-based epoxy vinyl ester resin after curing) and sample amounts of polymerized high-performance epoxy vinyl ester resin (in other words, high-performance epoxy vinyl ester resin after curing) were used to obtain test samples upon which the tests to find the mechanical properties of the resins after curing were performed. These tests enabled to define the mechanical properties of the bis-A-based epoxy vinyl ester resin after curing and of the high-performance epoxy vinyl ester resin after curing that could be used in the resin composition to obtain the prepreg of the invention.

### (iii) Thickening agent:

Thickening agents are conventional and commercially available agents that are responsible for increasing the viscosity of the prepreg during the first days after its fabrication. This change in viscosity is known as thickening and avoids the separation of fibers/resin phases during the storage of the prepreg and subsequently permits manipulation and enhances flowability of the impregnating paste. The most commonly used thickening agents include dispersions in polyester resins of alkaline earth metal oxides and hydroxides such as MgO, CaO or Mg(OH)₂ as active agents between a 25wt% and 35wt% (percentage by weight of the dispersion). There are also physical thickeners which may be used in the present invention such as certain type of crystalline polyesters like polyethylene adipate (PEA, with a number average molecular weight between 1500-3000) and polyhexamethylene adipate (PHMA, with a number average molecular weight between 1500-3000). A thickening agent which can be used is LUVATOL MK 35.

### (iv) Catalyst system

The catalyst system allows hardening of the resin composition, when the prepreg is further processed to produce the parts (1). Suitable catalysts are conventional catalysts, for example, tert-butyl perbenzoate, tert-butyl peroctoate or Peroxan "PEROXAN PO and Peroxan PB" and mixtures thereof. These catalysts allow the prepreg to be preserved under normal storage conditions, avoiding the need to refrigerate the prepreg for example. These catalysts are also highly reactive at the molding temperature in order to minimize the hardening or cycle times.

Apart from the ingredients under points (i) to (iv) above, the resin composition can optionally include other ingredients, such as other conventional additives like internal demolding agents, humectant additives or deaeration additives. Some of these ingredients and their proportions in the resin composition are included below.

The internal demolding agents prevent a part (1) from adhering to the mold where the part (1) is manufactured as explained further below. Common internal demolding agents are zinc stearate, or commercially available synergistic mixes of organic fatty acids, esters and amines.

Further additives to improve processing are for example humectant additives to improve the surface impregnation of the fibers by the resin composition, such as copolymers with acidic groups; also, deaeration additives to facilitate the evacuation of the air, such as defoaming solutions of polyacrylates and polymers, without silicone. Other additives comprise mineral fibers, such as Rockforce® RF825-Roxul®1000, a mineral silicate fiber with an aminosilane surface treatment. The chemical composition of the mineral fiber is (percentage by weight): SiO₂ between 38wt% and 43wt%, Al₂O₃ between 18wt% and 23wt%, MgO + CaO between 16wt% and 31wt%; FeO between 4,5wt% and 8wt%, Na₂O + K₂O less than or equal to 4,5wt%. These mineral fibers are included in the resin composition to improve mechanical performance of a part comprising the prepreg of the invention.

The proportion of the ingredients in the resin composition is indicated as parts of an ingredient by mass per 100 parts by mass of the sum of the two resins; that is, the sum of the parts by mass of the two resins is 100 and the amount in mass of the rest of the ingredients in the resin composition is referenced to these 100 parts. Thus, the resin composition of the prepreg of the invention presents:
- 50 to 90 parts of a thickenable bis-A-based epoxy vinyl ester resin, more preferably between 55-85 parts and even more preferably between 55-60 parts;
- 10 to 50 parts of a high-performance epoxy vinyl ester resin, more preferably between 25-45 parts and even more preferably between 40-45 parts;
- 3 to 12 parts of a thickening agent, more preferably between 5-10 parts and even more preferably between 6-8 parts;
- 1 to 2 parts of a catalyst system, more preferably between 1,1-1,8 parts and even more preferably between 1,2-1,5 parts;
- further ingredients (additives), specific for each resin composition, depending on the relevance of the feature provided by the further ingredient for the resin composition.

### Fiber layer

There are no particular restrictions on the fibers that can be used as the fiber layer within the present invention, and examples of suitable fibers include carbon fiber, glass fiber, aramid fiber, high-strength polyethylene fiber, boron fiber, steel fiber.

Among these, reinforcing fibers that use either glass fiber or carbon fiber and combinations thereof are preferred, as they offer excellent balance between elasticity and strength, and yield prepregs with excellent mechanical properties.

Furthermore, there are also no particular restrictions on the form of the reinforcing fibers used in the prepreg, and suitable examples include plain weave fabric, twill fabric, satin weave fabric, stitched sheets such as non-crimped fabric (NCF) wherein fiber bundles are layered, either unidirectionally or at various angles, and then stitched to prevent the layers coming apart, as well as non-woven fabric, mats, and unidirectional materials in which a bundle of reinforcing fibers is aligned unidirectionally. Mat relates to fiber layers including threads cut at a length between 15 and 50mm and randomly oriented. Of these, woven fabrics and stitched sheets, which offer superior levels of handling, are preferred. A reinforcing fiber woven fabric used in the present invention may have a variable fiber weight of between 500g/m² and 5000g/m². There are no particular restrictions on the lower limit for the fiber weight. However, a preferred fiber weight range is within 1500-2500g/m² and a more preferred range is within 1800-2000g/m². Depending on the fiber included in the prepreg, the percentage of fiber by weight of the prepreg is within a range of 30wt% to 70wt%; for instance, for glass fiber the fiber percentage is between 50wt% and 67wt% and for carbon fiber is between 40wt% and 55wt%. Depending on the fiber used, the fiber weight is within the following ranges:
Glass fiber: in general, between 500-5000g/m², preferably between 800-1800 g/m² and more preferably between 800-1250g/m²;
Carbon fiber: in general, between 150-900g/m², preferably between 200-800 g/m² and more preferably between 300-800g/m².

### Advantages

The prepregs of the present invention present mechanical properties similar to the conventional epoxy prepregs but advantageously present improved characteristics such as better storage stability. In this sense, they can be transported and stored at 15-20°C for up to 6 months while maintaining their processability, whereas epoxy prepregs should be stored at -20 ° C approx. Prepregs of the invention can also be produced at lower costs: for instance, when the prepreg of the invention is a glass fiber fabric prepreg, it can be produced at a cost of 5-6€/kg versus 8-10€/kg for the corresponding epoxy prepregs. And the prepregs of the invention also present shorter cycle times under molding conditions, for instance, they can be molded at 140°C at a cycle pace around 30s/mm of thickness of the part (1) compared to a cycle pace of epoxy prepregs of 1-2min/mm. Further advantages of the prepregs of the invention can also be found in the manufacturing of parts (1) by molding. The parts (1) including the prepreg of the invention can be molded at low temperature, between 80 and 150°C. This implies that is no compulsory to incur high investment in molds and in ancillary equipment capable to bear high temperatures. The parts (1) including the prepreg of the invention can also be molded at low pressures, between 10 and 90kp/cm². This allows to processing with vacuum techniques, which reduces investment when manufacturing large parts (1). The present prepregs also show improvements in the mechanical performance of impact and shearing, and good processability.

In a second aspect, the invention relates to a process for manufacturing the prepreg of the invention, hereinafter referred to as the process of the invention. The process of the invention comprises:
a) a preparation step for preparing the resin composition (10);
b) an impregnation step for impregnating a fiber layer (20) with the resin composition prepared in the preparation step.

The process of the invention is carried out in a SMC machine which is conventional and commercially available. In a particular embodiment, a SMC machine (SCHMIDT & HEINZMANN Spezialmaschinen 7520 Bruchsal) is used.

During the process of the invention the temperature of the resin composition shall be preferably maintained equal or lower than 35 °C, preferably between 30 and 35 °C.

The viscosity of the resin composition is preferably maintained below 15.000cP. Viscosity tests are performed according to UNE-EN ISO 2555 *"Plastics. Resins in the liquid state or as emulsions or dispersions. Determination of apparent viscosity by the Brookfield test method".* A Brookfield DV-III U viscometer (or viscosimeter), using the spindle 91 at 10rpm, was used for the viscosity tests.

The resin composition is prepared in a container which is present in the SMC machine. When preparing the resin composition, the thickening agent is added in the last place, after the rest of ingredients in the resin composition have been added.

The impregnation step includes blending the fibers of the fiber layer (20) with the resin composition (10). The SMC machine includes cutting means and vibrator means to provide a mat when a mat is included in the fiber layer.

According to a particular embodiment the resin composition is deposited on one side of the fiber layer. In another particular embodiment, the resin composition is deposited on both sides of the fiber layer. The resulting fiber with the resin composition are then conveyed between compacting rollers.

Typically supporting films (30) are also used for the preparation of the prepreg. These supporting films (30) are for example made of polyethylene or polyamide. The prepreg(101) has thus a sandwich structure (see Figure 3) where the fiber layer (20) has been impregnated by the resin composition (10) on both sides and is covered on both sides by the supporting films (30).

Once the prepreg (101) has been produced by the SMC machine, the prepreg (101) can, as usual, be wound onto spools (102) to be stored in reels (103).

In a third aspect, the invention relates to a part (hereafter the part of the invention) which is obtained from the prepreg of the invention. Some parts of the invention are toecaps, pit covers, helmets, automotive parts, body protectors for sport activities and, in general, any part requiring good mechanical performance (strength and rigidity) and light weight.

In a particular embodiment, the part of the invention can be manufactured only using the prepreg of the invention. In another particular embodiment, the part of the invention can be manufactured using the prepreg of the invention and a further material.

A fourth aspect of the invention relates to the manufacturing process of the part (1) by molding, hereinafter the molding of the invention. The molding of the invention for a part (1) including the prepreg of the invention may be carried out in a press in the following steps:
1) Cutting and weighing a piece of prepreg (101) to obtain a cut prepreg;
2) Placing the cut prepreg in a mold of a press;
3) Closing the mold and increasing the pressure in the mold by the press so that the shape of the cut prepreg is adapted to fill the cavities in the mold;
4) Polymerizing;
5) Press opening;
6) Demolding;
7) Trimming.

In the third step, when the mold is closed and the pressure is increased in the mold by the press, typically the resin composition of the prepreg is fluidized and is capable to move in the mold. This movement of the resin composition enables the resin composition to reach the cavities in the mold to fill portions in the mold where a deficit of prepreg could be found after the second step. If the prepreg also includes mat, threads of the mat are also capable to move in the mold in a way similar to that of the resin composition.

However, the values of the parameters defining the molding of the invention are advantageous over the values of the parameters required in conventional molding processes. For example, the prepreg of the invention allows for molding at:
a) a temperature between 80 and 150°C, preferably between 120 and 150°C and more preferably around 135°C;
b) a pressure between 10 and 90kp/cm² (9,81-88,26·10⁵Pa), preferably between 40 and 80kp/cm² (39,23-78,45·10⁵Pa), and more preferably around 60kp/cm²; (58,84·10⁵Pa)
c) a cycle pace between 20 and 50s/mm of thickness of the part (1), preferably around 30s/mm of thickness of the part (1).

### EXAMPLES

### Testing procedures

After manufacturing by the molding of the invention multiple parts of the invention, some of these parts (1) were tested to verify their performance. The tests undergone by these parts (1) are included below by reference to examples, which are intended to be only illustrative and are not construed to limit the present invention in any way.

Examples of parts of the invention including the fiber reinforced composite materials are included below.

### Example 1: Testing plates

A first example of resin composition included in testing plates is according to the following table:

| INGREDIENTS | PARTS | PRODUCER |
|---|---|---|
| Thickenable bis-A-based epoxy vinyl ester resin | 55 | |
| High-performance (elongation) epoxy vinyl ester resin | 45 | |
| Deaerator Additive BYK A 560 | 0,5 | BYK Chemie |
| Humectant Additive BYK W 996 | 1,5 | BYK Chemie |
| Thickening Agent Luvatol MK 35 | 6 | Lehnmann Voss&co |
| Catalyst Peroxan POTB | 1,5 | Pergan |
| Internal demolding agent INT 541 WT | 2 | Axel |

A prepreg comprising the resin composition of the table above and glass fiber with a weight of 600±45 g/m² and in a percentage between 65wt% and 67wt% was used for producing the testing plates.

The prepreg as specified above for the testing plates was produced by the process of the invention. The resin composition comprising the ingredients itemized in the preceding table was prepared in a container of the SMC machine in a preparation step. Then, the glass fibers of the fiber layer (20) were blended with the resin composition (10) in the impregnation step.

Once the prepreg was ready for molding the part of the invention, plates having a thickness of 3-4mm were manufactured in press for a subsequent characterization. The main parameters controlled during molding were temperature, pressure and time. Mold temperature was controlled to avoid too fast local polymerization areas; differences higher than 5°C were not observed between two points in the mold. Mold heating was by means of oil. Molding conditions were the following:
Mold temperature: between 120 and 150°C, preferably around 135°C;
Press pressure: between 10 and 90kp/cm² (9,81-88,26·10⁵Pa), preferably around 60kp/cm² (58,84·10⁵ N/m²);
Cycle time: between 90 and 120s with a cycle pace around 30s/mm of thickness of the part (1).

The following table shows the comparison of flexural, tensile and shear performance between testing plates comprising a polyester system and testing plates comprising the prepreg of the invention. Both the testing plate comprising a polyester system and the testing plate comprising the prepreg of the invention have the same biaxial glass fiber reinforcement of 600±45 g/m².

| TEST | STANDARD | UNIT | polyester system | | Prepreg of the invention | |
|---|---|---|---|---|---|---|
| | | | Load in a direction 0/90° with respect to fiber | Load in a direction ±45° with respect to fiber | Load in a direction 0/90° with respect to fiber | Load in a direction ±45° with respect to fiber |
| Glass fiber | ISO 1172-1999 | wt% | 66 | | 65-67 | |
| Flexural strength | UNE EN ISO 14125:1999/A 1-2011 | MPa | 570 | 177,5 | 615 | 224 |
| Flexural modulus | UNE EN ISO 14125:1999/A 1-2011 | GPa | 24,40 | 12,48 | 18,4 | 10,6 |
| Tensile strength | ISO 527-1 2012 | MPa | 265 | 85,1 | 336 | |
| Tensile modulus | ISO 527-1 2012 | GPa | 22,50 | 12,30 | 22,80 | |
| Shear strength | ASTM D 3846-2008 | MPa | 21,2 | 21,1 | 61 | - |

The table above shows that the prepreg of the invention render higher performance than polyester prepregs in flexural, tensile and shear loads.

The prepreg of the invention also render an outstanding impact performance. A prepreg comprising the resin composition of the table above and glass fiber in a percentage between 66wt% and 67wt% according to the following arrangements A and B was used for producing the testing plates for impact tests.

The arrangements A and B included in the table below correspond to prepregs (101) including multiple fiber layers (20).
Arrangement A corresponds to the following layers order:
   Fabric 800g/m² + Mat 450g/m² + Mat 450g/m² + Mat 450g/m² + Fabric 800g/m²
Arrangement B corresponds to the following layers order:
   Mat 450g/m² + Fabric 800g/m² + Fabric 800g/m² + Fabric 800g/m² + Mat 450g/m²

In these embodiments, mat relates to fiber layers (20) including threads cut at a length of 25mm and randomly oriented. The SMC machine used for producing the prepregs with the specified layers order included cutting means and vibrator means to provide the mat to the fiber layer.

The testing plates for impact tests were manufactured according to the same process as explained above for the plates for flexural, tensile and shear tests.

The following table includes the results according to UNE EN ISO 179-1 (2011) tests. The table shows a comparison of impact performance between testing plates comprising commercial polyesters and testing plates comprising the prepreg of the invention.

| Prepreg | Arrangement A | Arrangement B |
|---|---|---|
| | Impact strength (kJ/m²) | Impact strength (kJ/m²) |
| Commercial polyester | 150 | 150 |
| Derakane 790-based | 176 | 177 |
| Derakane 766-based | 195 | 197 |
| Derakane 786-based | 182 | 142 |
| Prepreg of the invention | 235 | 225 |

### Example 2: Safety toecap

A particular resin composition included in toecaps is according to the following table:

| INGREDIENTS | PARTS |
|---|---|
| Thickenable bis-A-based epoxy vinyl ester resin | 50 |
| High performance (elongation) epoxy vinyl ester resin | 50 |
| Mineral Fiber Rockforce® RF825-Roxul®1000 | 10 |
| Catalyst POTB or Trigonox 21S | 1,5 |
| Internal Demolding agent BYK LP W 20476 | 3 |
| Deaerator Additive BYK A 515 | 0,5 |
| Thickening Agent Luvatol MK 35 | 12 |

This particular resin composition for safety toecaps included mineral fibers in the form of short fibers cut a length of 0,5mm and were introduced in the resin composition (10) in the preparation step. This mineral fiber was included in the resin composition to improve mechanical performance of the safety toecaps, in particular, to improve impact performance of the safety toecap.

A prepreg comprising the resin composition of the table above and glass fiber in a percentage 65wt% was used for producing the safety toecaps. The arrangement of fiber layers (20) was the following:
Fabric 800g/m² + Mat 450g/m² in a 65wt%

Manufacturing conditions for the impregnation step in the process of the invention to produce the prepreg and the molding of the invention to produce the part have been described above.

The safety toecaps of the invention underwent the impact test defined in standard EN 344-1993 for safety shoes. Safety toecaps known in the art which are made of steel render a residual height of 14.0mm, which was used as a reference to validate the parts (1) of the invention. Test results showed that the safety toecaps of the invention passed the requirements of the EN 344-1993 standard and that the prepreg of the invention had a behavior similar to that of an epoxy prepreg and better than other commercial systems.

### Example 3: Drilled pit cover

A resin composition for drilled pit covers is included in the following table:

| INGREDIENTS | PARTS |
|---|---|
| Thickenable bis-A-based epoxy vinyl ester resin | 55 |
| High-performance (elongation) epoxy vinyl ester resin | 45 |
| Deaerator Additive BYK A 560 | 0,5 |
| Humectant Additive BYK W 996 | 1,5 |
| Thickening Agent Luvatol MK 35 | 6 |
| Catalyst Peroxan POTB | 1,5 |
| Internal demolding agent INT 541 WT | 2 |

A prepreg comprising the resin composition of the table above and comprising continuous glass fibers in a percentage between 65wt% and 67wt% was used to manufacture a drilled pit cover as a mesh strainer.

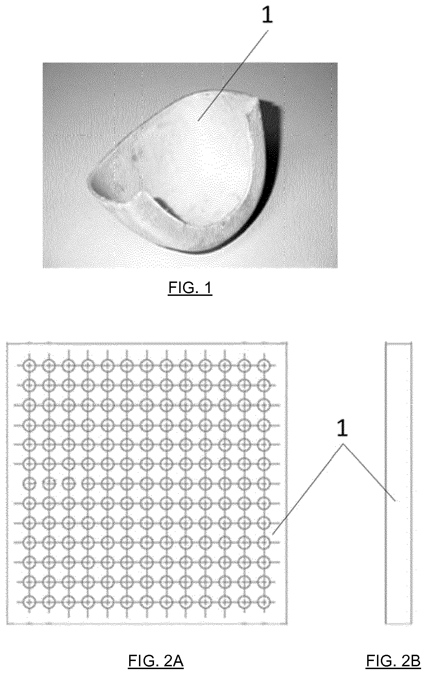

Bearing in mind the mechanical performance of the structural prepregs of the invention, after a calculus and simulation process to validate the engineering of the drilled pit cover, regarding the number of layers, thicknesses and orientation of the fibers, a structural prepreg having a biaxial reinforcement at ±45° was found to be the most appropriate for this use given its performance and configuration of the fibers. Structural analysis was used to calculate the maximum stresses taking place in the drilled pit cover so as to define minimum thickness of the part (1). ANSYS® v.12.0 was used to perform such an analysis where, by finite element and load conditions set up by the standard corresponding to these parts (1), the structure of the part (1) was defined. After the part (1) was manufactured, real tests were performed with the manufactured part (1). Working under this methodology, costs and time were minimized by avoiding trial and error cycles. As a result of the analysis commented above, a thickness of 55mm using the specified prepreg was found to pass the tests specified in standard EN 124 D400. To achieve the final 55mm thickness, it was necessary to stack 80 layers of prepreg which were molded in a frame in a press at 135°C, during 45min. and at a compacting pressure of 32kp/cm² (31,38-10⁵N/m²). Figures 2A and 2B show the result of the molding of the part (1) in a top view (figure 2A) and a side view (figure 2B).

The engineering and manufacturing of the drilled pit cover took into account mechanical performance, material peculiarities and the manufacturing process itself and rendered the following results:
- Improvements in manipulation because of reduction in tacky touch, typical in the epoxydic prepregs;
- No need to store or transport under refrigeration. This has an effect in a very positive way in reducing fixed costs and in a significant increase in material lifespan;
- Hot compression could be performed at low temperature: between 80 and 135°C. This implies that is not compulsory to incur high investment in molds and in ancillary equipment capable to bear high temperatures;
- The part could be molded at low pressures. This allows processing with vacuum techniques, which reduces investment for large parts (1);
- Shorter curing times for parts (1). Usually parts manufactured with 100% epoxy prepregs need around two hours, whereas the part comprising the prepreg of the invention could polymerize at a pace of 30s/mm of thickness of the part (1) at 140°C.

## Claims

1. A prepreg comprising:
a) a resin composition **characterized in that** it comprises:
a1) at least one thickenable bisphenol A-based epoxy vinyl ester resin containing carboxylic groups and an acid value between 10-50 mg KOH/g;
a2) at least one high-performance epoxy vinyl ester resin;
a3) a thickening agent;
a4) a catalyst system; and
b) a fiber layer
wherein
the at least one thickenable bisphenol A-based epoxy vinyl ester resin comprises after curing:
a) a tensile strength between 55MPa and 80MPa;
b) an elongation at break between 2% and 6%; and
c) a flexural strength between 100MPa and 140MPa,and the at least one high-performance epoxy vinyl ester resin is a resin having, after curing:
a) an impact resistance, unnotched Izod Impact, between 400 and 550J/m;
b) a tensile strength between 55MPa and 80MPa;
c) a tensile elongation at break between 8% and 14%; and
d) a flexural strength greater than or equal to 100MPa and a flexural modulus greater than or equal to 2500MPa,
wherein
the tensile strength, the elongation at break and the tensile elongation at break are determined according to ISO 527-1 2012;
the flexural strength and the flexural modulus are determined according to ISO 178 2010; the impact resistance, unotched Izod Impact is determined according to ASTM D 256 2010

2. A prepreg according to claim 1 wherein the fiber layer comprises a fiber selected from glass fiber, carbon fiber and combinations thereof.

3. A prepreg according to any of claims 1-2 wherein the fiber layer comprises a fiber selected from:
a) glass fiber within a range of 50wt% to 67wt% by weight of the prepreg;
b) carbon fiber within a range of 40wt% to 55wt% by weight of the prepreg;
and combinations thereof.

4. A prepreg according to any of claims 1-3 wherein the fiber layer comprises a fiber selected from:
a) glass fiber within a weight of 500 and 5000g/m²;
b) carbon fiber within a weight of 150 and 900g/m²;
and combinations thereof.

5. A prepreg according to any of claims 1-4 wherein the resin composition comprises 50 to 90 parts of the thickenable bisphenol A-based epoxy vinyl ester resin per 100 parts by mass of the sum of the thickenable bisphenol A-based epoxy vinyl ester resin and the high-performance epoxy vinyl ester resin.

6. A prepreg according to any of claims 1-5 wherein the resin composition comprises 10 to 50 parts of the high-performance epoxy vinyl ester resin per 100 parts by mass of the sum of the thickenable bisphenol A-based epoxy vinyl ester resin and the high-performance epoxy vinyl ester resin.

7. A prepreg according to any of claims 1-6 wherein the resin composition comprises 3 to 12 parts of the thickening agent per 100 parts by mass of the sum of the thickenable bisphenol A-based epoxy vinyl ester resin and the high-performance epoxy vinyl ester resin.

8. A prepreg according to any of claims 1-7 wherein the resin composition comprises 1 to 2 parts of the catalyst system per 100 parts by mass of the sum of the thickenable bisphenol A-based epoxy vinyl ester resin and the high-performance epoxy vinyl ester resin.

9. Process for manufacturing the prepreg according to any of claims 1-8 comprising:
a) a preparation step for preparing the resin composition (10);
b) an impregnation step for impregnating a fiber layer (20) with the resin composition (10) prepared in the preparation step.

10. Process according to claim 9 wherein the impregnation step comprises blending the fibers of the fiber layer (20) with the resin composition (10).

11. A part (1) comprising at least a prepreg according to any of claims 1-8.

12. Process for manufacturing a part (1) comprising at least a prepreg according to any of claims 1-8 comprising molding the part (1) at:
a) a temperature between 80 and 150°C;
b) a pressure between 0.98 and 8.83 MPa (10-90 kp/cm²)
c) a cycle pace between 20 and 50s/mm of thickness of the part (1).

13. Process for manufacturing the part (1) according to claim 12 comprising a cycle pace of 30s/mm of thickness of the part (1) at a temperature of 140ºC.

## Patentansprüche

1. Prepreg umfassend:
a) eine Harzzusammensetzung, **dadurch gekennzeichnet, dass** sie Folgendes umfasst:
a1) mindestens ein verdickbares Epoxid-Vinyl-Ester-Harz auf Bisphenol A-Basis, das Carboxylgruppen enthält und einen Säurewert zwischen 10 - 50 mg KOH/g aufweist;
a2) mindestens ein Hochleistungs-Epoxyd-Vinyl-Ester-Harz;
a3) ein Verdickungsmittel;
a4) ein Katalysatorsystem und
b) eine Faserschicht,
wobei
das mindestens eine verdickbare Epoxyd-Vinyl-Ester-Harz auf Bisphenol A-Basis nach Aushärten Folgendes umfasst:
a) eine Zugfestigkeit zwischen 55 MPa und 80 MPa;
b) eine Dehnung bei Bruch zwischen 2 % und 6 % und
c) eine Biegefestigkeit zwischen 100 MPa und 140 MPa, und wobei das mindestens eine Hochleistungsepoxyd-Vinyl-Ester-Harz ein Harz ist, das nach Aushärten Folgendes aufweist:
a) eine Schlagfestigkeit, ungekerbter Izod-Schlag, zwischen 400 und 550 J/m;
b) eine Zugfestigkeit zwischen 55 MPa und 80 MPa;
c) eine Zugdehnung bei Bruch zwischen 8 % und 14 % und
d) eine Biegefestigkeit größer als oder gleich 100 MPa und einen Biegemodul größer als oder gleich 2500 MPa,
wobei
die Zugfestigkeit, die Dehnung bei Bruch und die Zugdehnung bei Bruch nach ISO 527-1 2012 bestimmt werden;
die Biegefestigkeit und der Biegemodul nach ISO 178 2010 bestimmt werden;
die Stoßfestigkeit, ungekerbter Izodschlag, nach ASTM D 256 2010 bestimmt wird.

2. Prepreg nach Anspruch 1, wobei die Faserschicht eine Faser umfasst, die aus Glasfaser, Kohlenstofffaser und Kombinationen davon ausgewählt wird.

3. Prepreg nach einem der Ansprüche 1-2, wobei die Faserschicht eine Faser umfasst, die aus folgenden ausgewählt wird:
a) Glasfaser innerhalb eines Bereichs von 50 Gew.-% bis 67 Gew.-% nach Gewicht des Prepregs;
b) Kohlenstofffaser innerhalb eines Bereichs von 40 Gew.-% bis 55 Gew.-% nach Gewicht des Prepregs und Kombinationen davon.

4. Prepreg nach einem der Ansprüche 1-3, wobei die Faserschicht eine Faser umfasst, die aus folgenden ausgewählt wird:
a) Glasfaser innerhalb eines Gewichts von 500 bis 5000 g/m²;
b) Kohlenstofffaser innerhalb eines Gewichts von 150 bis 900 g/m²
und Kombinationen davon.

5. Prepreg nach einem der Ansprüche 1-4, wobei die Harzzusammensetzung 50 bis 90 Teile des verdickbaren Epoxid-Vinyl-Ester-Harzes auf Bisphenol A-Basis pro 100 Masseteile der Summe des verdickbaren Epoxid-Vinyl-Ester-Harzes auf Bisphenol A-Basis und des Hochleistungsepoxyd-Vinyl-Ester-Harzes umfasst.

6. Prepreg nach einem der Ansprüche 1-5, wobei die Harzzusammensetzung 10 bis 50 Teile des Hochleistungsepoxyd-Vinyl-Ester-Harzes pro 100 Masseteile der Summe des verdickbaren Epoxy-Vinyl-Ester-Harzes auf Bisphenol A-Basis und des Hochleistungsepoxyd-Vinyl-Ester-Harzes umfasst.

7. Prepreg nach einem der Ansprüche 1-6, wobei die Harzzusammensetzung 3 bis 12 Teile des Verdickungsmittels pro 100 Masseteile der Summe des verdickbaren Epoxyd-Vinyl-Ester-Harzes auf Bisphenol A-Basis und des Hochleistungsepoxyd-Vinyl-Ester-Harzes umfasst.

8. Prepreg nach einem der Ansprüche 1-7, wobei die Harzzusammensetzung 1 bis 2 Teile des Katalysatorsystems pro 100 Masseteile der Summe des verdickbaren Epoxyd-Vinyl-Ester-Harzes auf Bisphenol A-Basis und des Hochleistungsepoxyd-Vinyl-Ester-Harzes umfasst.

9. Verfahren zur Herstellung des Prepregs nach einem der Ansprüche 1-8, umfassend:
a) einen Präparationsschritt zum Präparieren der Harzzusammensetzung (10);
b) einen Imprägnierschritt zum Imprägnieren einer Faserschicht (20) mit der Harzzusammensetzung (10), die im Präparationsschritt präpariert wurde.

10. Verfahren nach Anspruch 9, wobei der Imprägnierschritt das Mischen der Fasern der Faserschicht (20) mit der Harzzusammensetzung (10) umfasst.

11. Ein Teil (1); umfassend mindestens ein Prepreg nach einem der Ansprüche 1-8.

12. Verfahren zur Herstellung eines Teils (1), das mindestens ein Prepreg nach einem der Ansprüche 1-8 umfasst, umfassend Formen des Teils (1) bei:
a) einer Temperatur zwischen 80 und 150 °C;
b) einem Druck zwischen 0,98 und 8,83 MPa (10-90 kp/cm²)
c) einem Zyklustempo zwischen 20 und 50 s/mm der Dicke des Teils (1).

13. Verfahren zur Herstellung des Teils (1) nach Anspruch 12, umfassend ein Zyklustempo von 30 s/mm der Dicke des Teils (1) bei einer Temperatur von 140 °C.

## Revendications

1. Préimprégné comprenant :
a) une composition de résine **caractérisée en ce qu'**elle comprend :
a1) au moins une résine époxy-vinylester à base de bisphénol A épaississable contenant des groupes carboxyliques et un indice d'acide compris entre 10 et 50 mg KOH/g ;
a2) au moins une résine époxy-vinylester haute performance ;
a3) un agent épaississant ;
a4) un système de catalyseur ; et
b) une couche de fibres
dans lequel
l'au moins une des résines époxy-vinylester à base de bisphénol A épaississable comprend, après durcissement :
a) une résistance à la traction comprise entre 55 MPa et 80 MPa ;
b) un allongement à la rupture compris entre 2 % et 6 % ; et
c) une résistance à la flexion comprise entre 100 MPa et 140 MPa, et l'au moins une des résines époxy-vinylester haute performance est un résine ayant, après durcissement :
a) une résistance aux chocs Izod sur éprouvette entaillée, comprise entre 400 et 550 J/m ;
b) une résistance à la traction comprise entre 55 MPa et 80 MPa ;
c) un allongement à la rupture par traction compris entre 8 % et 14 % ; et
d) une résistance à la flexion supérieure ou égale à 100 MPa et un module de flexion supérieur ou égal à 2500 MPa,
dans lequel
la résistance à la traction, l'allongement à la rupture et l'allongement à la rupture par traction sont déterminés selon ISO 527-1 2012 ;
la résistance à la flexion et le module de flexion sont déterminés selon ISO 178 2010 ;
la résistance aux chocs Izod sur éprouvette entaillée est déterminée selon ASTM D 256 2010.

2. Préimprégné selon la revendication 1, dans lequel la couche de fibres comprend une fibre choisie parmi une fibre de verre, une fibre de carbone et des combinaisons de celles-ci.

3. Préimprégné selon l'une quelconque des revendications 1 à 2, dans lequel la couche de fibres comprend une fibre choisie parmi :
a) une fibre de verre dans une plage de 50 % en poids à 67 % en poids par rapport au poids du préimprégné ;
b) une fibre de carbone dans une plage de 40 % en poids à 55 % en poids par rapport au poids du préimprégné ;
et des combinaisons de celles-ci.

4. Préimprégné selon l'une quelconque des revendications 1 à 3, dans lequel la couche de fibres comprend une fibre choisie parmi :
a) une fibre de verre en un poids compris entre 500 et 5000 g/m² ;
b) une fibre de carbone en un poids compris entre 150 et 900 g/m² ;
et des combinaisons de celles-ci.

5. Préimprégné selon l'une quelconque des revendications 1 à 4, dans lequel la composition de résine comprend 50 à 90 parties de la résine époxy-vinylester à base de bisphénol A épaississable par 100 parties en masse de la somme de la résine époxy-vinylester à base de bisphénol A épaississable et de la résine époxy-vinylester haute performance.

6. Préimprégné selon l'une quelconque des revendications 1 à 5, dans lequel la composition de résine comprend 10 à 50 parties de la résine époxy-vinylester haute performance par 100 parties en masse de la somme de la résine époxy-vinylester à base de bisphénol A épaississable et de la résine époxy-vinylester haute performance.

7. Préimprégné selon l'une quelconque des revendications 1 à 6, dans lequel la composition de résine comprend 3 à 12 parties de l'agent épaississant par 100 parties en masse de la somme de la résine époxy-vinylester à base de bisphénol A épaississable et de la résine époxy-vinylester haute performance.

8. Préimprégné selon l'une quelconque des revendications 1 à 7, dans lequel la composition de résine comprend 1 à 2 parties du système de catalyseur par 100 parties en masse de la somme de la résine époxy-vinylester à base de bisphénol A épaississable et de la résine époxy-vinylester haute performance.

9. Procédé de fabrication du préimprégné selon l'une quelconque des revendications 1 à 8 comprenant :
a) une étape de préparation pour préparer la composition de résine (10) ;
b) une étape d'imprégnation pour imprégner une couche de fibres (20) avec la composition de résine (10) préparée dans l'étape de préparation.

10. Procédé selon la revendication 9, dans lequel l'étape d'imprégnation comprend le mélange des fibres de la couche de fibres (20) avec la composition de résine (10).

11. Pièce (1) comprenant au moins un préimprégné selon l'une quelconque des revendications 1 à 8.

12. Procédé de fabrication d'une pièce (1) comprenant au moins un préimprégné selon l'une quelconque des revendications 1 à 8 comprenant le moulage de la pièce (1) à :
a) une température comprise entre 80 et 150 °C ;
b) une pression comprise entre 0,98 et 8,83 MPa (10 à 90 kp/cm2)
c) une cadence de cycle comprise entre 20 et 50 s/mm d'épaisseur de la pièce (1).

13. Procédé de fabrication de la pièce (1) selon la revendication 12, comprenant une cadence de cycle de 30 s/mm d'épaisseur de la pièce (1) à une température de 140 °C.
